# EUROPÄISCHE PATENTSCHRIFT

(11) **EP 4 332 393 B1**
(45) Veröffentlichungstag und Bekanntmachung des Hinweises auf die Patenterteilung: **16.07.2025**
(21) Anmeldenummer: 22192655.3
(22) Anmeldetag: 29.08.2022
(51) Int. Cl.: F16B 25/00, F16B 35/06

(54) **SCHRAUBE MIT STUFENFÖRMIGEM KOPF**
SCREW WITH STEPPED HEAD
VIS À TÊTE ÉTAGÉE

(43) Veröffentlichungstag der Anmeldung: 06.03.2024
(73) Patentinhaber: SPAX International GmbH & Co. KG, 58256 Ennepetal (DE)
(72) Erfinder: LANGEWIESCHE, Frank, 58256 Ennepetal (DE); Steinmeister, Christian, 58256 Ennepetal (DE)
(74) Vertreter: Schneider, Sascha

(56) Entgegenhaltungen:
- EP-A1- 0 060 441
- DE-A1- 102006 023 025
- DE-A1- 102006 023 026
- JP-A- 2004 108 531
- JP-A- 2016 176 582
- US-A1- 2004 071 524

## Beschreibung

Die Erfindung betrifft eine Schraube mit einem Kopf gemäß dem Patentanspruch 1.

Im Stand der Technik existieren Schrauben mit Köpfen, wobei die Köpfe kegelförmig ausgebildet sind, um einen festen Sitz im Holz oder in einem Beschlag sicherzustellen. Sie sind für den universalen Einsatz geeignet.

Allerdings weisen herkömmliche Schrauben folgende Nachteile auf. Der kegelförmige Kopf treibt beim Versenken die Holzfasern auseinander und das Holz neigt zum Spleißen.

Im Randbereich führt das Spleißen zu erheblichen Problemen bei der Verschraubung.

Verschiedenen Hersteller entwickelten solche Senkkopfschrauben weiter und statteten die Köpfe mit verschiedensten Formen von Rippen und Taschen aus. Die Taschen und Rippen zielen darauf ab, die Holzfasern beim Versenken des Kopfes aufzufräsen, um das Spleißen des Holzes zu vermindern. Dabei reißen die Holzfasern allerdings teilweise ab, oder die Holzfasern stellen sich als Splitter im Bereich um den Schraubenkopf auf und behindern die Befestigung der Schraube.

Aus der JP 2004 108531 A ist eine Holzschraube bekannt.

Es ist daher die Aufgabe der vorliegenden Erfindung, die Nachteile des

Stands der Technik zu beseitigen und insbesondere Einschrauben der Schrauben zu verbessern.

Gelöst wird diese Aufgabe mit dem Gegenstand des unabhängigen Anspruchs.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Den angegebenen Wertebereichen sollen auch innerhalb der genannten Grenzen liegende Werte als Grenzwerte offenbart und in beliebiger Kombination beanspruchbar sein. Die Erfindung betrifft eine Schraube mit einem Kopf, wobei der Kopf stufenförmig ausgebildet ist.

Erfindungsgemäß ist es vorteilhaft möglich, dass die stufige Ausbildung beim Auftreffen auf eine Holzoberfläche ähnlich wie ein Stanzwerkzeug wirkt, sodass Holzfasern durchgestanzt werden, insbesondere in Richtung der Schraubenlängsachse. Vorteilhaft wird beim Versenken der Schraube kaum eine Keilwirkung entfaltet, sodass ungewünschte Splitter nicht bzw. zumindest nur geringfügig auftreten können. Die unerwünschte Fräswirkung tritt somit kaum mehr auf.

In einer bevorzugten Ausführungsform ist vorgesehen, dass der Kopf mehrere Stufen aufweist, wobei die Stufen entlang einer Längsachse der Schraube hintereinander angeordnet sind, wobei die Stufen insbesondere unmittelbar hintereinander angeordnet sind. Durch diese Anordnung ist es vorteilhaft möglich, dass die vorteilhafte Stanzwirkung mehrmals hintereinander erfolgen kann, und besonders bevorzugt ist vorgesehen, dass die Stanzwirkung unmittelbar nacheinander erfolgen kann.

In einer anderen bevorzugten Ausführungsform ist vorgesehen, dass sich die Stufen senkrecht zur Längsachse der Schraube erstrecken, wobei insbesondere Unterkanten der Stufen senkrecht zur Längsachse verlaufen. Hierdurch ist es vorteilhaft möglich, dass eine besonders gute Stanzwirkung erreicht werden kann, insbesondere wenn der Winkel zwischen den Unterkanten der Stufen und der Einschraubrichtung beziehungsweise Längsachse der Stufe 90° beträgt.

In einer anderen bevorzugten Ausführungsform ist vorgesehen, dass sich zwischen benachbarten Stufen ein konischer Bereich befindet. Hierdurch ist es vorteilhaft möglich, im Vergleich zu senkrechten Stufen, die unmittelbar hintereinander angeordnet sind, einen gleitenden Übergang zwischen nacheinander folgenden Stufen herzustellen, so dass die Stanzwirkung nicht stoßartig, sondern mit einem geringeren Anstieg erfolgen kann.

In einer anderen bevorzugten Ausführungsform ist vorgesehen, dass der Kopf rotationssymmetrisch zur Längsachse der Schraube ausgebildet ist. Dadurch sind auch die Stufen beziehungsweise ist die stufenförmige Ausbildung rotationssymmetrisch zur Längsachse ausgebildet. Dadurch ist es vorteilhaft möglich, dass die Stanzwirkung auf allen Seiten in lateraler Richtung der Schraube gleichmäßig erfolgen kann.

In einer anderen bevorzugten Ausführungsform ist vorgesehen, dass die Stufen um die Längsachse der Schraube umlaufend angeordnet sind und insbesondere ringförmig angeordnet sind. Ähnlich wie zur rotationssymmetrischen Ausbildung ist es auch hier vorteilhaft möglich, dass die Stanzwirkung in allen lateralen Richtungen gleichförmig ausgebildet sein kann.

In einer anderen bevorzugten Ausführungsform ist vorgesehen, dass die Stufen kreiszylinderförmig ausgebildet sind und insbesondere zentral mittig Öffnungen für einen Kraftangriff eines Werkzeugs aufweisen. Durch diese Ausbildung ist es vorteilhaft möglich, einerseits eine in lateraler Richtung gleichförmige Stanzwirkung zu erreichen und andererseits eine unmittelbare Übertragung der Kraft eines Werkzeugs in die gewünschte Stanzwirkung zu erreichen.

In einer anderen bevorzugten Ausführungsform ist vorgesehen, dass die Stufen derart ausgebildet sind, dass eine Verbindung von äußersten lateralen Punkten eine Mantelfläche M,M' bildet, wobei die Mantelfläche M,M' einen Öffnungswinkel W von 80° bis 100°, vorzugsweise 90°, aufweist. Hierdurch ist es vorteilhaft möglich, die erfindungsgemäße Schraube auch in herkömmlichen Beschlägen mit Öffnungswinkeln von 80° bis 100° einzusetzen, so dass vorteilhaft keine Extra-Beschläge verwendet werden müssen.

2 Erfindungsgemäß ist es vorgesehen, dass der Kopf an den Stufen Auflagestücke zur Auflage in einem Beschlag aufweist. Durch die Auflagestücke kann vorteilhaft erreicht werden, dass die Auflage im Beschlag verbessert werden kann, da eine größere Fläche zur Auflage vorhanden ist.

Bevorzugt sind die Auflagestücke symmetrisch in Bezug auf die Längsachse angeordnet. Dadurch wird vorteilhaft eine gleichmäßige Verteilung der Last im Beschlag erreicht.

In einer anderen bevorzugten Ausführungsform ist vorgesehen, dass die Schraube mindestens zwei Stufen aufweist und an jeder Stufe mehrere Auflagestücke angeordnet sind. Dadurch kann vorteilhaft erreicht werden, dass die Schraube im Beschlag verbessert auflegen kann.

In einer anderen bevorzugten Ausführungsform ist vorgesehen, dass sich die Auflagestücke jeweils in einem radialen Winkel von 10 bis 50° erstrecken. Dadurch wird eine optimale Auflage im Beschlag erreicht, wobei zugleich die unerwünschte Fräswirkung verringert werden kann.

In einer anderen bevorzugten Ausführungsform ist vorgesehen, dass jeweils zwei in Längsachse fluchtend hintereinander an unterschiedlichen Stufen, bevorzugt an direkt aufeinanderfolgenden Stufen, angeordnet sind. Dadurch kann vorteilhaft erreicht werden, dass die Belastungen im Beschlag gleichmäßig aufgenommen werden können.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Figur 1 zeigt einen Kopf einer Schraube gemäß einer ersten, nicht-erfindingsgemäßen Ausführungsform in einer Seitenansicht,
Figur 2 zeigt den Kopf der Figur 1 in einer perspektivischen Ansicht,
Figur 3 zeigt einen Kopf einer Schraube gemäß einer zweiten, nicht-erfindingsgemäßen Ausführungsform in einer Seitenansicht,
Figur 4 zeigt den Kopf der Figur 3 in einer perspektivischen Ansicht,
Figur 5 zeigt den Kopf aus Figur 1 in einem herkömmlichen Beschlag,
Figur 6 zeigt einen Kopf einer Schraube gemäß einer dritten erfindungsgemäßen Ausführungsform,
Figur 7 zeigt den Kopf der Figur 6 in einer perspektivischen Ansicht,
Figur 8 zeigt den Kopf der Figur 6 in einer Ansicht von unten auf den Kopf,
Figur 9 zeigt den Kopf aus Figur 6 in einem herkömmlichen Beschlag, und
Figur 10 zeigt einen Kopf einer Schraube einer vierten erfindungsgemäßen Ausführungsform in einer Ansicht von unten auf den Kopf.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

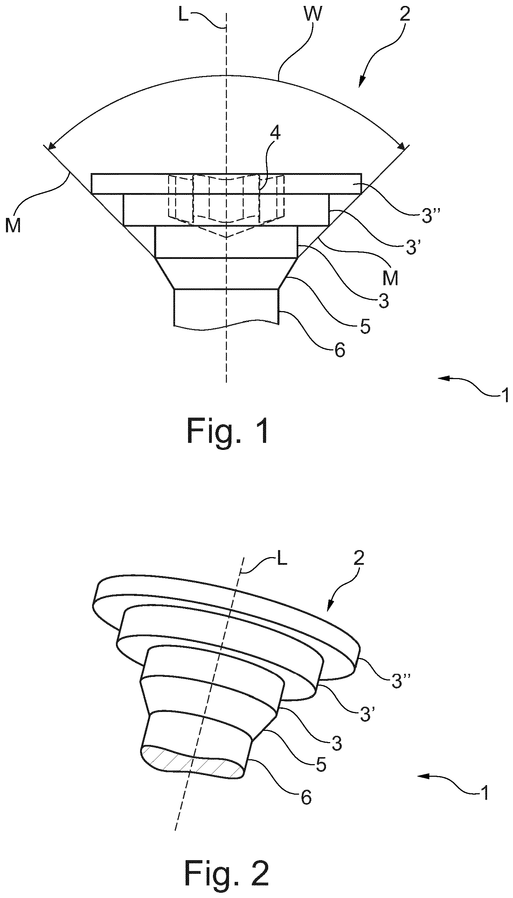

Figur 1 zeigt schematisch einen Kopf 2 einer Schraube 1 gemäß einer ersten, nicht-erfindingsgemäßen Ausführungsform in einer Seitenansicht. Die Schraube 1 ist nicht weiter dargestellt. Der Fachmann weiß, wie Schrauben, insbesondere Holzschrauben, ausgebildet sind. Figur 2 zeigt die Schraube 1 in einer schematischen perspektivischen Ansicht.

Der Kopf 2 ist rotationssymmetrisch zu einer Längsachse L der Schraube 1 ausgebildet. Die Schraube 1 erstreckt sich entlang der Längsachse L vom Kopf 2 bis hin zu einem vorderen Ende, das nicht dargestellt ist.

Der Kopf 2 ist stufenförmig ausgebildet. In dieser beispielhaften Ausführungsform weist der Kopf 2 drei Stufen 3,3',3" auf.

In der Figur 1 ist weiterhin gestrichelt dargestellt, dass der Kopf 2 eine Aufnahmeöffnung 4 für einen Kraftangriff durch ein Werkzeug, z.B. ein Bit, aufweist. Die Stufen 3,3',3" sind kreiszylinderförmig ausgebildet und weisen zentral mittig Öffnungen für den Kraftangriff des Werkzeugs auf.

Die Stufen 3,3',3" erstrecken sich senkrecht zur Längsachse L. Unterkanten der Stufen verlaufen senkrecht zur Längsachse L. Die Stufen sind in Längsachse L gesehen unmittelbar hintereinander angeordnet.

Die Schraube 1 weist einen kreiszylindrischen Bereich 6 auf, an dem ein nicht dargestelltes Gewinde angeordnet ist. Von diesem Bereich 6 aus erstreckt sich ein sich aufweitender konisch ausgebildeter Bereich 5. Hinter diesem konisch ausgebildeten Bereich 5 ist die erste Stufe 3 angeordnet, hinter der ersten Stufe 3 ist die zweite Stufe 3' angeordnet und dahinter ist die dritte Stufe 3" angeordnet.

In der Figur 1 ist weiterhin eine Mantelfläche M des Kopfes 2 dargestellt. Diese Mantelfläche M ergibt sich durch die Verbindung der äußersten lateralen Punkte der Unterkanten der Stufen 3,3',3". In dieser beispielhaften Ausführungsform beträgt der Öffnungswinkel W der Mantelfläche M 80°-100°, so dass die erfindungsgemäße Schraube 2 in herkömmlichen Beschlägen verwendet werden kann.

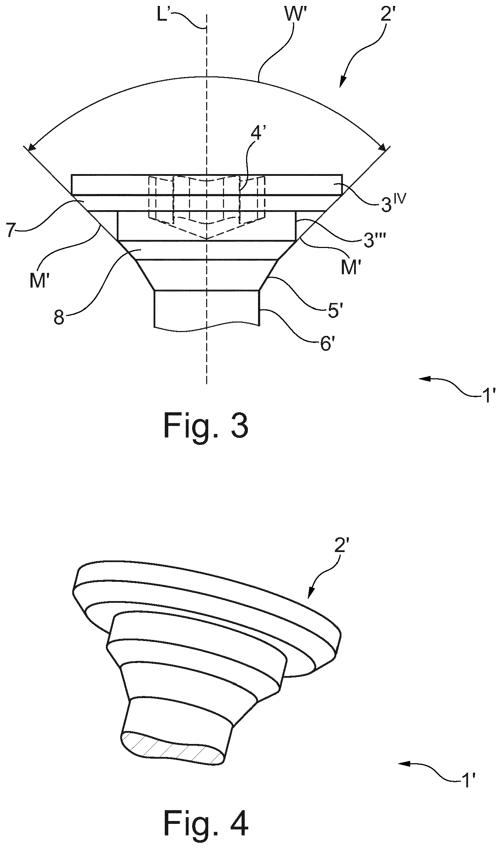

Figur 3 zeigt schematisch einen Kopf 2' einer Schraube 1' gemäß einer zweiten, nicht-erfindingsgemäßen Ausführungsform in einer Seitenansicht. Die Schraube 1' ist nicht weiter dargestellt. Der Fachmann weiß, wie Schrauben, insbesondere Holzschrauben, ausgebildet sind. Figur 4 zeigt die Schraube 1' in einer schematischen perspektivischen Ansicht.

Der Kopf 2' ist rotationssymmetrisch zu einer Längsachse L' der Schraube 1' ausgebildet. Die Schraube 1' erstreckt sich entlang der Längsachse L' vom Kopf 2' bis hin zu einem vorderen Ende, das nicht dargestellt ist.

Der Kopf 2' ist stufenförmig ausgebildet. In dieser beispielhaften Ausführungsform weist der Kopf 2' nur zwei Stufen 3‴ und 3^{IV} auf.

In der Figur 3 ist weiterhin gestrichelt dargestellt, dass der Kopf 2' eine Aufnahmeöffnung 4' für einen Kraftangriff durch ein Werkzeug, z.B. ein Bit, aufweist. Die Stufen 3‴,3^{IV} sind kreiszylinderförmig ausgebildet und weisen zentral mittig Öffnungen für den Kraftangriff des Werkzeugs auf. Die Stufen 3‴,3^{IV} erstrecken sich senkrecht zur Längsachse L'.

Im Unterschied zur ersten Ausführungsform weist diese zweite Ausführungsform nur zwei Stufen 3‴,3^{IV} auf. Zwischen den beiden Stufen 3‴,3^{IV} erstreckt sich ein sich aufweitender konischer Bereich 7, der sich zum Durchmesser des Stufe 3^{IV} aufweitet.

Wie auch in der ersten Ausführungsform weist die Schraube 1' einen kreiszylindrischen Bereich 6' auf, an dem ein nicht dargestelltes Gewinde angeordnet ist. Von diesem Bereich 6' aus erstreckt sich ein sich aufweitender konisch ausgebildeter Bereich 5'. Hinter diesem konisch ausgebildeten Bereich 5' erstreckt sich ein weiterer konisch ausgebildeter Bereich 8, der sich zur Stufe 3‴ hin aufweitet.

In der Figur 3 ist weiterhin eine Mantelfläche M' des Kopfes 2' dargestellt. Diese Mantelfläche M' ergibt sich durch die Verbindung der äußersten lateralen Punkte der Unterkanten der Stufen 3"', 3^{IV} und der konischen Bereiche 7, 8.

In dieser beispielhaften Ausführungsform beträgt der Öffnungswinkel W' der Mantelfläche M' 80-100°, so dass die erfindungsgemäße Schraube 1' in herkömmlichen Beschlägen verwendet werden kann.

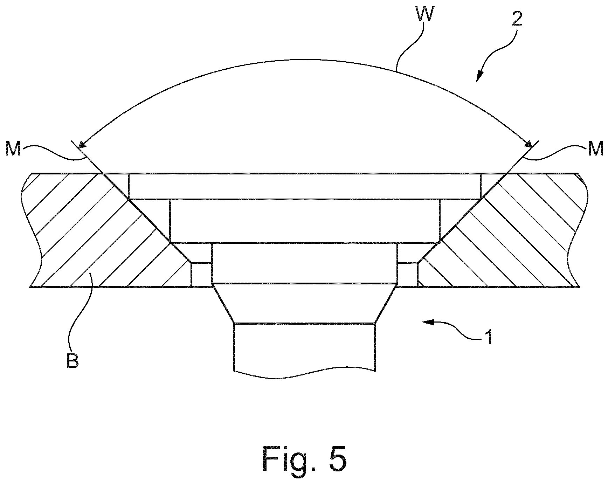

Figur 5 zeigt schematisch die Schraube 1 aus den Figuren 1 und 2 in einem herkömmlichen Beschlag B.

Bezüglich der Ausbildung der Schraube wird auf die Ausführungen zu den Figuren 1 und 2 verwiesen. In dieser Darstellung wird gezeigt, dass die Schraube 1 aufgrund des Öffnungswinkels W von 80°-100° der Mantelfläche M auf einfache Weise in herkömmlichen Beschlägen B verwendet werden kann. Die Unterkanten der Schraube 1 liegen vorteilhaft am Beschlag an, so dass keine Extraanfertigungen von Beschlägen für die erfindungsgemäße Schraube nötig sind. Das Gleiche gilt sinngemäß auch für die Ausführungsform aus den Figuren 3 und 4, welche ebenfalls mit herkömmlichen Beschlägen verwendet werden könnte.

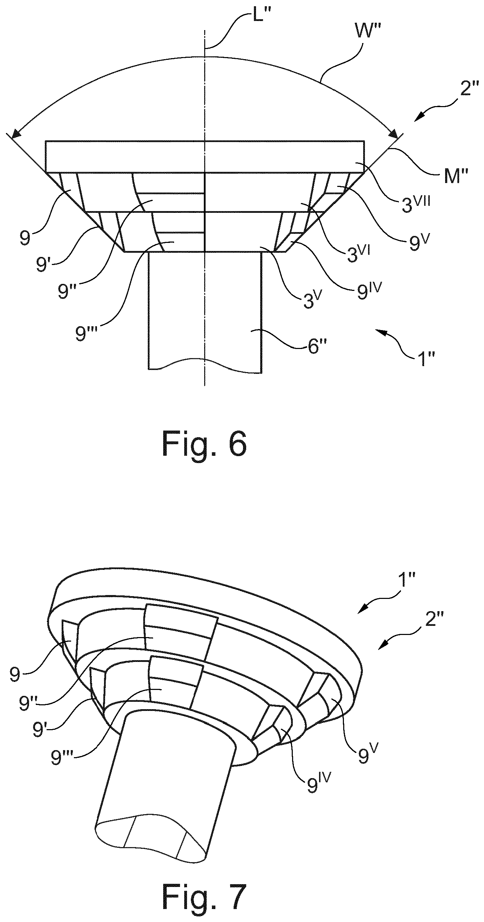

Figuren 6 bis 9 zeigen einen Kopf 2" einer Schraube 1" gemäß einer dritten, erfindungsgemäßen Ausführungsform. Einige Ausführungen zu den obig beschriebenen Ausführungsformen treffen auch auf diese Ausführungsform zu.

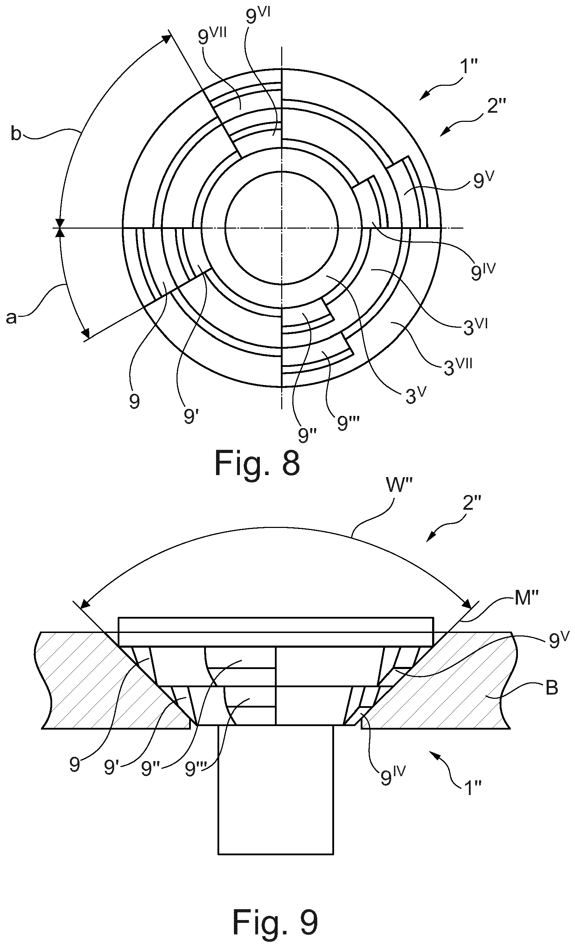

Im Gegensatz zu den obig genannten Ausführungsformen weist die Schraube 1" einen Kopf 2" auf, welcher insgesamt acht Auflagestücke 9,9',9",9"', 9^{IV},9^{V} und zwei in der Figur 8 dargestellte Auflagestücke 9^{VI},9^{VII} aufweist. Alle acht Auflagestücke sind in der Figur 8 dargestellt, welche den Kopf 2" in einer Draufsicht von unten darstellt.

Die Auflagestücke weisen jeweils eine Auflagefläche auf, welche in Bezug auf die Längsachse L" in einem Winkel von 40° bis 50° geneigt ist, damit das Auflagestück mit der Auflagefläche bündig auf einer Seitenkante eines Beschlags B (Figur 9) aufliegt.

Die Auflagestücke 9,9',9",9‴,9^{IV}, 9^{V},9^{VI},9^{VII},9^{VIII},9^{IX},9^{X},9^{XI},9^{XII}, 9^{XIII},9^{XIV}, 9^{XV} sind in Bezug auf die Längsachse L" symmetrisch angeordnet.

In der Figur 8 sieht man, dass die Auflagestücke 9,9',9",9‴,9^{IV},9^{V},9^{VI},9^{VII}, 9^{VII},9^{IX},9^{X},9^{XI},9^{XII},9^{XIII},9^{XIV},9^{XV} sich jeweils über einen Winkel a um die Längsachse L" erstrecken. Zwischen benachbarten Auflagestücken 9,9',9", 9‴,9^{IV},9^{V},9^{VI},9^{VII},9^{VIII},9^{IX},9^{X},9^{XI},9^{XII},9^{XIII},9^{XIV},9^{XV} erstreckt sich ein Winkel b.

In dieser speziellen Ausführungsform beträgt der Winkel a etwa 10 bis 30°; da die Auflagestücke 9,9',9",9‴,9^{IV},9^{V},9^{VI},9^{VII},9^{VIII},9^{IX},9^{X},9^{XI},9^{XII},9^{XIII}, 9^{XIV},9^{XV} symmetrisch angeordnet sind, beträgt der Winkel b zwischen benachbarten Auflagestücken 9,9',9",9‴,9^{IV},9^{V},9^{VI},9^{VII},9^{VIII},9^{IX},9^{X},9^{XI},9^{XII},9^{XIII}, 9^{XIV},9^{XV} entsprechend zwischen 60 und 80°.

Weiterhin sind jeweils vier Auflagestücke 9',9",9^{IV},9^{VI} symmetrisch an der Stufe 3^{V} angebracht.

Die anderen Auflagestücke 9,9‴,9^{V},9^{VII} sind an der weiteren Stufe 3^{VI} angeordnet.

Die Auflagestücke 9,9',9",9‴,9^{IV},9^{V},9^{VI},9^{VII},9^{VIII},9^{IX},9^{X},9^{XI},9^{XII},9^{XIII}, 9^{XIV},9^{XV} ermöglichen einen verbesserten Sitz der Schraube 1" beziehungsweise des Kopfes 2" im Beschlag B, wobei immer noch die gewünschte Stanzwirkung im Vordergrund wirken kann.

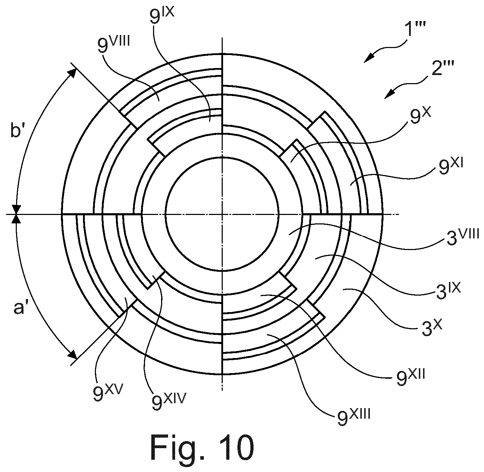

Figur 10 zeigt schematisch von unten eine Ansicht eines Kopfes 2‴ einer vierten Ausführungsform einer erfindungsgemäßen Schraube 1"'. Im Wesentlichen weist diese vierte Ausführungsform die Merkmale der dritten Ausführungsform auf. Diese vierte Ausführungsform unterscheidet sich von der dritten Ausführungsform dadurch, dass die Auflagestücke 9^{VIII},9^{IX}, 9^{X}, 9^{XI},9^{XII},9^{XIII},9^{XIV},9^{XV} sich in Bezug auf die Längsachse in radialer Richtung in einem größeren Winkel a' als in der dritten Ausführungsform mit dem Winkel a erstrecken. In dieser Ausführungsform beträgt der Winkel a' etwa 45°.

Dadurch ist die gesamte Auflagefläche der Auflagestücke 9^{VIII},9^{IX}, 9^{X}, 9^{XI}, 9^{XII},9^{XIII},9^{XIV},9^{XV} größer als in der dritten Ausführungsform, so dass ein verbesserter Sitz im Beschlag B erreicht werden kann, wohingegen die gewünschte Stanzwirkung ein wenig geringer ausfällt.

Dementsprechend ist der Winkel b' zwischen benachbarten Auflagestücken 9^{VIII},9^{IX}, 9^{X}, 9^{XI},9^{XII},9^{XIII},9^{XIV},9^{XV} kleiner als in der dritten Ausführungsform und beträgt ungefähr ebenfalls 45°.

Die obig beschriebenen Ausführungsformen dienen lediglich zur Illustration der Erfindung und grenzen den Gegenstand der Erfindung beziehungsweise die Idee der Erfindung keinesfalls ein.

### Bezugszeichenliste

| | |
|---|---|
| 1,1'1",1‴ | Schraube |
| 2,2',2",2‴ | Kopf |
| 3,3',3",3‴,3^{IV},3^{V},3^{VI},3^{VII}, | |
| 3^{VIII},3^{IX},3^{X} | Stufe |
| 4,4' | Aufnahmeöffnung |
| 5,5' | konischer Bereich |
| 6,6'," | kreiszylindrischer Bereich |
| 7 | konischer Bereich |
| 8 | konischer Bereich |
| 9,9',9",9‴,9^{IV},9^{V},9^{VI},9^{VII},9 ^{VIII} | |
| 9^{IX},9^{X},9^{XI},9^{XII},9^{XIII},9^{XIV},9^{XV} | Auflagestück |
| B | Beschlag |
| L,L',L" | Längsachse der Schraube |
| M,M',M" | Mantelfläche des Kopfes |
| W,W',W" | Winkel der Mantelfläche |
| a,a',b,b' | Winkel |

## Patentansprüche

1. Schraube (1,1',1",1‴), insbesondere Holzschraube, aufweisend einen Kopf (2,2',2",2‴), **dadurch gekennzeichnet, dass** der Kopf (2,2',2",2‴) stufenförmig ausgebildet ist, wobei der Kopf (2,2',2",2‴) an den Stufen (3,3',3",3‴,3^{IV}, 3^{V},3^{VI},3^{VII},3^{VIII},3^{IX},3^{X}) Auflagestücke (9,9',9",9‴,9^{IV},9^{V},9^{VI},9^{VII},9^{VIII}, 9^{IX},9^{X},9^{XI},9^{XII},9^{XIII},9^{XIV},9^{XV}) zur Auflage in einem Beschlag (B) aufweist.

2. Schraube (1,1',1",1‴) gemäß Anspruch 1, wobei der Kopf (2,2',2",2‴) mehrere Stufen (3,3',3",3‴,3^{IV},3^{V},3^{VI},3^{VII},3^{VIII},3^{IX},3^{X}) aufweist, wobei die Stufen (3,3',3",3‴,3^{IV},3^{V},3^{VI},3^{VII},3^{VIII},3^{IX},3^{X}) entlang einer Längsachse (L,L',L") der Schraube (1,1',1",1‴) hintereinander angeordnet sind, wobei die Stufen (3,3',3",3‴,3^{IV},3^{V},3^{vI},3^{VII},3^{VIII},3^{IX},3^{X}) insbesondere unmittelbar hintereinander angeordnet sind.

3. Schraube (1,1',1",1‴) gemäß mindestens einem der vorhergehenden Ansprüche, wobei sich die Stufen (3,3',3",3‴,3^{IV}, 3^{V},3^{VI},3^{VII},3^{VIII},3^{IX},3^{X}) senkrecht zur Längsachse (L,L',L") der Schraube (1,1',1",1‴) erstrecken, wobei insbesondere Unterkanten der Stufen (3,3',3",3‴,3^{IV}, 3^{V},3^{VI},3^{VII},3^{VIII},3^{IX},3^{X}) senkrecht zur Längsachse (L,L',L") verlaufen.

4. Schraube (1,1',1",1‴) gemäß mindestens einem der vorhergehenden Ansprüche, wobei zwischen benachbarten Stufen (3‴,3^{IV}) ein konischer Bereich (7) ausgebildet ist.

5. Schraube (1,1',1",1‴) gemäß mindestens einem der vorhergehenden Ansprüche, wobei der Kopf (2,2',2",2‴) rotationssymmetrisch zur Längsachse (L,L',L") der Schraube (1,1',1",1‴) ausgebildet ist, wobei die Stufen (3,3',3",3‴,3^{IV}, 3^{V},3^{VI},3^{VII},3^{VIII},3^{IX},3^{X}) um die Längsachse (L,L',L") der Schraube umlaufend angeordnet, sind, insbesondere ringförmig.

6. Schraube (1,1',1",1‴) gemäß mindestens einem der vorhergehenden Ansprüche, wobei die Stufen (3,3',3",3‴,3^{IV}, 3^{V},3^{VI},3^{VII},3^{VIII},3^{IX},3^{X}) kreiszylinderförmig ausgebildet sind und insbesondere zentral mittig Öffnungen (4,4') für einen Kraftangriff eines Werkzeugs aufweisen.

7. Schraube (1,1',1",1‴) gemäß mindestens einem der vorhergehenden Ansprüche, wobei die Stufen (3,3',3",3‴,3^{IV}, 3^{V},3^{VI},3^{VII},3^{VIII},3^{IX},3^{X}) derart ausgebildet sind, dass eine Verbindung von äußersten lateralen Punkten eine Mantelfläche (M,M',M") bildet, wobei die Mantelfläche (M,M',M") einen Öffnungswinkel (W,W',W") von 80° bis 100°, vorzugsweise 90°, aufweist.

8. Schraube (1,1',1",1''') gemäß mindestens einem der vorhergehenden Ansprüche, wobei die Auflagestücke (9,9',9",9‴,9^{IV},9^{V},9^{VI},9^{VII},9^{VIII},9^{IX},9^{X},9^{XI},9^{XII}, 9^{XIII} 9^{XIV},9^{XV}) bevorzugt symmetrisch in Bezug auf die Längsachse (L,L',L") angeordnet sind.

9. Schraube (1,1',1",1‴) gemäß Anspruch 8, wobei die Schraube (1,1',1",1‴) mindestens zwei Stufen (3,3',3",3‴,3^{IV}, 3^{V},3^{VI},3^{VII},3^{VIII}, 3^{IX},3^{X}) aufweist und an jeder Stufe (3,3',3",3‴,3^{IV}, 3^{V},3^{VI},3^{VII},3^{VIII},3^{IX}, 3^{X}) mehrere Auflagestücke (9,9',9",9‴,9^{IV},9^{V},9^{VI},9^{VII},9^{VIII},9^{IX},9^{X},9^{XI}, 9^{XII},9^{XIII},9^{XIV},9^{XV}) angeordnet sind.

10. Schraube (1,1',1",1‴) gemäß mindestens einem der Ansprüche 8 oder 9, wobei sich die Auflagestücke (9,9',9",9‴,9^{IV},9^{V},9^{VI},9^{VII},9^{VIII},9^{IX},9^{X},9^{XI}, 9^{XII},9^{XIII},9^{XIV},9^{XV}) jeweils in einem radialen Winkel von 10 bis 50° erstrecken.

11. Schraube (1,1',1",1‴) gemäß mindestens einem der vorhergehenden Ansprüche 8 bis 10, wobei jeweils zwei Auflagestücke (9,9',9",9‴,9^{IV}, 9^{V},9^{VI},9^{VII},9^{VIII},9^{IX},9^{X},9^{XI},9^{XII},9^{XIII},9^{XIV},9^{XV}) in Längsachse (L") fluchtend hintereinander an unterschiedlichen Stufen (3,3',3",3‴,3^{IV}, 3^{V},3^{VI},3^{VII},3^{VIII},3^{IX},3^{X}), bevorzugt an direkt aufeinanderfolgenden Stufen (3,3',3",3‴,3^{IV}, 3^{V},3^{VI},3^{VII},3^{VIII},3^{IX},3^{X}), angeordnet sind.

## Claims

1. Screw (1, 1', 1", 1‴), in particular wood screw, having a head (2, 2', 2", 2‴), **characterized in that** the head (2, 2', 2", 2‴) is stepped, wherein the head (2, 2', 2", 2‴) has support pieces (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) on the steps (3, 3', 3", 3‴, 3^{IV}, 3^{V}, 3^{VI}, 3^{VII}, 3^{VIII}, 3^{IX}, 3^{X}) for support in a fitting (B).

2. Screw (1, 1', 1", 1‴) according to Claim 1, wherein the head (2, 2', 2", 2‴) has several steps (3, 3', 3", 3‴, 3^{IV}, 3^{V}, 3^{VI}, 3^{VII}, 3^{VIII}, 3^{IX}, 3^{X}), wherein the steps (3, 3', 3", 3‴, 3^{IV}, 3^{V}, 3^{VI}, 3^{VII}, 3^{VIII}, 3^{IX}, 3^{X}) are arranged one behind the other along a longitudinal axis (L, L', L") of the screw (1, 1', 1", 1‴), wherein the steps (3, 3', 3", 3‴, 3^{IV}, 3^{V}, 3^{VI}, 3^{VII}, 3^{VIII}, 3^{IX}, 3^{X}) are in particular arranged directly one behind the other.

3. Screw (1, 1', 1", 1‴) according to at least one of the preceding claims, wherein the steps (3, 3', 3", 3‴, 3^{IV}, 3^{V}, 3^{VI}, 3^{VII}, 3^{VIII}, 3^{IX}, 3^{X}) extend perpendicular to the longitudinal axis (L, L', L") of the screw (1, 1', 1", 1"'), wherein in particular lower edges of the steps (3, 3', 3", 3‴, 3^{IV}, 3^{V}, 3^{VI}, 3^{VII}, 3^{VIII}, 3^{IX}, 3^{X}) run perpendicular to the longitudinal axis (L, L', L").

4. Screw (1, 1', 1", 1‴) according to at least one of the preceding claims, wherein a conical region (7) is formed between adjacent steps (3‴, 3^{IV}).

5. Screw (1, 1', 1", 1‴) according to at least one of the preceding claims, wherein the head (2, 2', 2", 2‴) is formed rotationally symmetrical to the longitudinal axis (L, L', L") of the screw (1, 1', 1", 1‴), wherein the steps (3, 3', 3", 3‴, 3^{IV}, 3^{V}, 3^{VI}, 3^{VII}, 3^{VIII}, 3^{IX}, 3^{X}) are arranged circumferentially around the longitudinal axis (L, L', L") of the screw, in particular annularly.

6. Screw (1, 1', 1", 1‴) according to at least one of the preceding claims, wherein the steps (3, 3', 3", 3‴, 3^{IV}, 3^{V}, 3^{VI}, 3^{VII}, 3^{VIII}, 3^{IX}, 3^{X}) are circular-cylindrical in shape and have in particular centrally located openings (4, 4') for a drive of a tool.

7. Screw (1, 1', 1", 1‴) according to at least one of the preceding claims, wherein the steps (3, 3', 3", 3‴, 3^{IV}, 3^{V}, 3^{VI}, 3^{VII}, 3^{VIII}, 3^{IX}, 3^{X}) are designed in such a way that a connection of outermost lateral points forms a lateral surface (M, M', M"), wherein the lateral surface (M, M', M") has an opening angle (W, W', W") of 80° to 100°, preferably 90°.

8. Screw (1, 1', 1", 1‴) according to at least one of the preceding claims, wherein the support pieces (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) are preferably arranged symmetrically with respect to the longitudinal axis (L, L', L").

9. Screw (1, 1', 1", 1‴) according to Claim 8, wherein the screw (1, 1', 1", 1‴) has at least two steps (3, 3', 3", 3‴, 3^{IV}, 3^{V}, 3^{VI}, 3^{VII}, 3^{VIII}, 3^{IX}, 3^{X}), and a plurality of support pieces (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) are arranged on each step (3, 3', 3", 3‴, 3^{IV}, 3^{V}, 3^{VI}, 3^{VII}, 3^{VIII}, 3^{IX}, 3^{X}).

10. Screw (1, 1', 1", 1‴) according to at least one of Claims 8 or 9, wherein the support pieces (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) respectively extend at a radial angle of 10 to 50°.

11. Screw (1, 1', 1", 1‴) according to at least one of the preceding Claims 8 to 10, wherein two support pieces (9, 9', 9", 9‴, 9^{IV}, 9^{V}, 9^{VI}, 9^{VII}, 9^{VIII}, 9^{IX}, 9^{X}, 9^{XI}, 9^{XII}, g^{XIII}, 9^{XIV}, 9^{XV}) are respectively arranged on different steps (3, 3', 3", 3‴, 3^{IV}, 3^{V}, 3^{VI}, 3^{VII}, 3^{VIII}, 3^{IX}, 3^{X}) one behind the other in alignment along the longitudinal axis (L"), preferably on directly successive steps (3, 3', 3", 3‴, 3^{IV}, 3^{V}, 3^{VI}, 3^{VII}, 3^{VIII}, 3^{IX}, 3^{X}).

## Revendications

1. Vis (1, 1', 1", 1‴), en particulier vis en bois, présentant une tête (2, 2', 2", 2‴), **caractérisée en ce que** la tête (2, 2', 2", 2‴) est étagée, dans laquelle la tête (2, 2', 2", 2‴) présente sur les étages (3, 3', 3", 3‴, 3^{VI}, 3^{V}, 3^{VI}, 3^{VII}, 3^{VIII}, 3^{IX}, 3^{X}) des pièces d'appui (9, 9', 9", 9"', 9^{IV}, 9^{V}, 9^{VI}, 9^{VII}, 9^{VIII}, 9^{IX}, 9x, 9^{XI}, 9^{XII}, 9^{XIII}, 9^{XIV}, 9^{XV}) pour s'appuyer dans une ferrure (B).

2. Vis (1, 1', 1", 1‴) selon la revendication 1, dans laquelle la tête (2, 2', 2", 2‴) présente plusieurs étages (3, 3', 3", 3‴, 3^{IV}, 3^{V}, 3^{VI}, 3^{VII}, 3^{VIII}, 3^{IX}, 3^{X}), dans laquelle les étages (3, 3', 3", 3‴, 3^{IV}, 3^{V}, 3^{VI}, 3^{VII}, 3^{VIII}, 3^{IX}, 3^{X}) sont disposés l'un derrière l'autre le long d'un axe longitudinal (L, L', L") de la vis (1, 1', 1", 1‴), dans laquelle les étages (3, 3', 3", 3‴, 3^{IV}, 3^{V}, 3^{VI}, 3^{VII}, 3^{VIII}, 3^{IX}, 3^{X}) sont disposés en particulier directement l'un derrière l'autre.

3. Vis (1, 1', 1", 1‴) selon au moins l'une des revendications précédentes, dans laquelle les étages (3, 3', 3", 3‴, 3^{IV}, 3^{V}, 3^{VI}, 3^{VII}, 3^{VIII}, 3^{IX}, 3^{X}) s'étendent verticalement à l'axe longitudinal (L, L', L") de la vis (1, 1', 1", 1"'), dans laquelle en particulier des bords inférieurs des étages (3, 3', 3", 3‴, 3^{IV}, 3^{V}, 3^{VI}, 3^{VII}, 3^{VIII}, 3^{IX}, 3^{X}) sont verticaux à l'axe longitudinal (L, L', L").

4. Vis (1, 1', 1'', 1‴) selon au moins l'une des revendications précédentes, dans laquelle une partie conique (7) est formée entre des étages (3"', 3^{VI}) voisins.

5. Vis (1, 1', 1", 1‴) selon au moins l'une des revendications précédentes, dans laquelle la tête (2, 2', 2", 2‴) est formée en symétrie de rotation par rapport à l'axe longitudinal (L, L', L") de la vis (1, 1', 1", 1‴), dans laquelle les étages (3, 3', 3", 3‴, 3^{IV}, 3^{V}, 3^{VI}, 3^{VII}, 3^{VIII}, 3^{IX}, 3^{X}) sont disposés de manière périphérique autour de l'axe longitudinal (L, L', L") de la vis, en particulier de manière annulaire.

6. Vis (1, 1', 1", 1"') selon au moins l'une des revendications précédentes, dans laquelle les étages (3, 3', 3", 3‴, 3^{IV}, 3^{V}, 3^{VI}, 3^{VII}, 3^{VIII}, 3^{IX}, 3^{X}) sont formés en cylindre circulaire et présentent en particulier des ouvertures (4, 4') centrales pour une intervention de force d'un outil.

7. Vis (1, 1', 1", 1‴) selon au moins l'une des revendications précédentes, dans laquelle les étages (3, 3', 3", 3‴, 3^{IV}, 3^{V}, 3^{VI}, 3^{VII}, 3^{VIII}, 3^{IX}, 3^{X}) sont ainsi formés qu'une liaison de points latéraux les plus extérieurs forme une surface d'enveloppe (M, M', M"), dans laquelle la surface d'enveloppe (M, M', M'') présente un angle d'ouverture (W, W', W") de 80° à 100°, de préférence de 90°.

8. Vis (1, 1', 1", 1‴) selon au moins l'une des revendications précédentes, dans laquelle les pièces d'appui (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) sont disposées de préférence de manière symétrique par rapport à l'axe longitudinal (L, L', L'').

9. Vis (1, 1', 1'', 1‴) selon la revendication 8, dans laquelle la vis (1, 1', 1'', 1‴) présente au moins deux étages (3, 3', 3", 3‴, 3^{IV}, 3^{V}, 3^{VI}, 3^{VII}, 3^{VIII}, 3^{IX}, 3^{X}), et plusieurs pièces d'appui (9, 9', 9", 9‴, 9^{IV}, 9v, 9^{VI}, 9^{VII}, 9^{VIII}, 9^{IX}, 9x, 9^{XI}, 9^{XII}, 9^{XIII}, 9^{XIV}, 9^{XV}) sont disposées sur chaque étage (3, 3', 3", 3‴, 3^{IV}, 3^{V}, 3^{VI}, 3^{VII}, 3^{VIII}, 3^{IX}, 3^{X}).

10. Vis (1, 1', 1'', 1‴) selon au moins l'une des revendications 8 ou 9, dans laquelle les pièces d'appui (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) s'étendent respectivement dans un angle radial de 10 à 50°.

11. Vis (1, 1', 1'', 1‴) selon au moins l'une des revendications précédentes 8 à10, dans laquelle respectivement deux pièces d'appui (9, 9', 9", 9‴, 9^{IV}, 9^{V}, 9^{VI}, 9^{VII}, 9^{VIII}, 9^{IX}, 9^{X}, 9^{XI}, 9^{XII}, 9^{XIII}, 9^{XIV}, 9^{XV}) dans l'axe longitudinal (L'') sont disposées alignées l'une derrière l'autre sur différents étages (3, 3', 3", 3‴, 3^{IV}, 3^{V}, 3^{VI}, 3^{VII}, 3^{VIII}, 3^{IX}, 3^{X}), de préférence sur des étages (3, 3', 3", 3‴, 3^{IV}, 3^{V}, 3^{VI}, 3^{VII}, 3^{VIII}, 3^{IX}, 3^{X}) qui se suivent directement.
